# FASCICULE DE BREVET EUROPEEN

(11) **EP 0 868 368 B1**
(45) Date de publication et mention de la délivrance du brevet: **10.01.2001**
(21) Numéro de dépôt: 96941070.3
(22) Date de dépôt: 28.11.1996
(51) Int. Cl.: B65D 77/20

(54) **STRUCTURE D'OBTURATION POUR UN CONTENANT**
BEHÄLTERVERSCHLIESSANORDNUNG
CONTAINER SEALING ASSEMBLY

(30) Priorité: 29.11.1995 FR 9514117
(43) Date de publication de la demande: 07.10.1998
(60) Demande divisionnaire: 00120089.8
(73) Titulaire: SOPLARIL, 92800 Puteaux (FR)
(72) Inventeur: ENGELAERE, Jean-Claude, F-59210 Coudekerque-Branche (FR)
(74) Mandataire: Hirsch, Marc-Roger
(86) Numéro de dépôt international: FR9601884
(87) Numéro de publication internationale: WO9719867

(56) Documents cités:
- EP-A- 0 160 975
- EP-A- 0 661 154
- WO-A-93/08982
- DE-U- 9 114 409
- FR-A- 2 669 607
- GB-A- 2 319 746
- US-A- 3 335 939
- US-A- 4 673 601
- US-A- 4 913 307
- US-A- 5 061 532
- US-A- 5 089 320

## Description

L'invention est relative à une structure d'obturation pour un contenant muni d'une ouverture, structure du genre de celles qui comprennent une feuille soudée suivant le bord de l'ouverture du contenant.

Pour des raisons économiques et de recyclage, les produits sont conditionnés en quantités de plus en plus importantes dans un même contenant, en particulier dans un même emballage. Ceci est à la source de problèmes pour le consommateur qui ne souhaite pas utiliser en une seule fois le produit conditionné. Après avoir ouvert le contenant pour prélever une partie du contenu, le consommateur souhaite pouvoir refermer facilement et efficacement le contenant et retrouver en partie son intégrité initiale d'avant ouverture. Par exemple, dans le cas de produits alimentaires, le consommateur souhaite pouvoir refermer l'emballage avant de le replacer dans son réfrigérateur pour éviter des problèmes d'odeur, de dessèchement du produit conditionné, de perte de place et autres inconvénients.

Ceci est également vrai pour des produits autres que les produits alimentaires, par exemple pour des produits industriels conditionnés en grand nombre tels que les vis, clous, rondelles, ainsi que pour les produits pharmaceutiques par exemple sous forme de pilules ou cachets.

Ces exemples non limitatifs montrent qu'il existe une demande importante, dans des domaines très variés, pour une structure d'obturation pour contenants permettant une ouverture facile et une nouvelle fermeture efficace et simple du contenant après le prélèvement d'une partie de son contenu.

L'invention a donc pour but de fournir une structure d'obturation qui satisfait à ces exigences.

L'invention a également pour but de fournir une structure d'obturation qui soit relativement simple et économique à fabriquer et à mettre en place sur le contenant.

Le document EP-A-0160975 décrit sommairement une feuille multicouche scellable à chaud ou à froid selon un cordon de soudure, comprenant un support sur lequel sont appliquées une couche adhésive et une couche de couverture, cette dernière pouvant être aussi soudante. La description ne mentionne pas les épaisseurs des différentes couches ni le type de soudure réalisé.

Le document DE-A-9114409 décrit une structure su type de celle décrite dans le document précédant. la description de ce document est aussi silencieuse sur les épaisseurs des différentes couches et le type de soudure réalisé.

Le document EP-A-0661154 décrit un système d'emballage qui est différent du système précédent, la jonction ne s'effectuant pas par un cordon, mais sur la surface complète de contact au niveau des bords du contenant.

Le document WO-A-9308982 décrit un système destiné à la sacherie, dans lequel un film est enroulé sur lui-même pour former un sachet. Le film comprend un adhésif par pression selon un motif spécifique, cet adhésif étant au sein même de la couche soudante.

Le document US-P-5061532 décrit un emballage, mais cet emballage n'est pas du type refermable.

Le document US-P-5089320 décrit une feuille multicouche, comprenant une couche support, une couche adhésive et une couche soudante. Lorsque le soudage se fait à chaud, ce document recommande de maintenir la couche coudante intacte jusqu'à la déchirure.

L'invention fournit donc une structure d'obturation pour un contenant muni d'une ouverture, comprenant une feuille soudée suivant le bord de l'ouverture du contenant, la feuille étant constituée d'au moins trois couches, à savoir une couche soudante appliquée et soudée suivant un cordon de largeur L contre le bord de l'ouverture, une couche extérieure formant barrière et une couche adhésive intermédiaire, la couche soudante ayant subi une fragilisation dans la région du cordon, la soudure du cordon de la couche soudante sur le bord de l'ouverture présentant une résistance à l'arrachement supérieure à la force d'adhésion entre couche soudante et couche adhésive de sorte qu'à la première opération de dégagement de l'ouverture le cordon soudé de la couche soudante reste en place sur le bord de l'ouverture et se sépare par déchirure du reste de la couche soudante et de la couche adhésive, laquelle est ainsi découverte sur une zone correspondant au dit cordon, la fermeture du contenant pouvant être effectuée à nouveau par application de la zone découverte de la couche adhésive contre le cordon de la couche soudante restée en place, caractérisée en ce que ladite couche adhésive intermédiaire est formée par un dépôt de résine d'épaisseur minimale de 10 micromètres, et en ce que la fragilisation de ladite couche soudante dans la région du cordon, est réalisée par la soudure du cordon à l'aide d'une barrette chauffante de manière à déformer la couche soudante et la couche adhésive, sur toute la largeur L du cordon.

La couche extérieure peut être constituée par un film souple; son épaisseur peut être d'environ 50 micromètres. La couches extérieure est avanatageusement réalisée en polyester bi-orienté.

En variante, la couche extérieure peut être constituée par un film rigide.

La couche soudante est constituée par un film de faible épaisseur, en particulier de l'ordre de 20 micromètres, facile à déchirer ou d'une épaisseur plus importante présentant des propriétés de déchirure facile obtenues par l'ajustement des paramètres d'extrusion ou par l'ajout de charges minérales.

A titre d'exemple, la couche soudante peut être constituée par un film de polyéthylène haute densité.

La couche adhésive est formée, en particulier, par un polymère acrylique à effet collant permanent, sous forme solide à température ambiante, ou par un adhésif "Hot melt" sur une base d'un élastomère thermoplastique.

Les matières composant les couches sont avantageusement conformes aux législations définissant l'emploi d'adhésifs dans le cadre du conditionnement de produits alimentaires . Les couches peuvent être transparentes de sorte que la feuille de la structure est elle-même transparente.

L'invention est également relative à un contenant fermé par une telle structure d'obturation. Le contenant peut être formé par un film rigide ou par un film souple. Dans un exemple de réalisation, le contenant est réalisé à partir d'un film de PVC (polychlorure de vinyle) rigide recouvert intérieurement par un film de polyéthylène linéaire avec interposition entre les deux films d'une couche de colle polyuréthane.

L'invention fournit aussi un procédé d'obturation d'un contenant muni d'une ouverture par une feuille soudée suivant le bord de l'ouverture, dans lequel on utilise une feuille constituée d'au moins trois couches, à savoir une couche soudante à appliquer contre le bord de l'ouverture, une couche extérieure formant barrière et une couche adhésive intermédiaire, et qu'on réalise la soudure de la couche soudante sur le bord de l'ouverture suivant un cordon de largeur L présentant une résistance à l'arrachement supérieure à la force d'adhésion entre couche soudante et couche adhésive, de sorte qu'à la première opération de dégagement de l'ouverture du contenant, le cordon soudé de la couche soudante reste en place sur le bord de l'ouverture et se sépare essentiellement par déchirure du reste de la couche soudante et de la couche adhésive, caractérisé en ce que ladite couche adhésive intermédiaire est formée par un dépôt de résine d'épaisseur minimale de 10 micromètres, et en ce que la soudure est effectuée à l'aide d'une barrette chauffante de manière à provoquer une fragilisation par déformation de la couche soudante et de la couche adhésive dans la région du cordon, sur toute la largeur L de celui-ci.

On peut préparer la feuille constituée d'au moins trois couches en déposant la couche adhésive entre les couches extérieure et soudante par extrusion à chaud d'une résine adhésive entre ces couches.

Selon une autre possibilité on dépose à chaud la résine adhésive sur la couche extérieure avant de calandrer la couche soudante sur celle-ci.

La feuille ainsi préparée peut être stockée sous forme enroulée car la couche soudante assure la protection de la couche adhésive et permet d'éviter des problèmes de collage spire à spire dans les bobines de feuille.

L'invention consiste, mises à part les dispositions exposées ci-dessus, en un certain nombre d'autres dispositions dont il sera plus explicitement question ci-après à propos d'exemples de réalisation décrits avec références aux dessins ci-annexés mais qui ne sont nullement limitatifs.

La Figure 1, de ces dessins, est une coupe schématique transversale, fortement agrandie, d'une feuille constituée de trois couches pour une structure d'obturation selon l'invention.

La Figure 2 est une coupe schématique, semblable à la Figure 1, illustrant l'opération de soudure de la feuille sur le bord d'un contenant.

La Figure 3 est une coupe schématique, semblable à la Figure 2, illustrant l'opération d'ouverture du contenant et la séparation du cordon de la couche soudante qui demeure sur le bord du contenant.

La Figure 4 est une coupe schématique fortement agrandie avec parties supprimées, d'un contenant fermé par une structure d'obturation selon l'invention.

La Figure 5 montre, semblablement à la Figure 4, le contenant et la structure d'obturation après ouverture.

La Figure 6 est un diagramme représentant les variations de la viscosité, portées en ordonnée, en fonction de la température portée en abscisse d'un polymère acrylique utilisé comme résine adhésive.

La Figure 7 est un diagramme donnant les variations de la force d'adhésion entre deux films appliqués l'un contre l'autre sous une pression déterminée, avec une couche intermédiaire de résine adhésive à base de polymère acrylique, en fonction du temps de contact, exprimé en minutes, porté en abscisse.

La Figure 8, enfin, est un diagramme illustrant les variations de la force de décollement d'une résine adhésive à base de polymère acrylique, exprimées en newton/centimètre (N/cm), entre les deux films de polyester évoqués à propos de la Figure 7, en fonction du temps porté en abscisse et exprimé en semaines.

On rappellera tout d'abord les caractéristiques de l'adhésif "Hot melt" sur la base d'un élastomère thermoplastique:
- solide à température ambiante
- point de fusion compris entre 85 et 95°C
- masse volumique : 0,96 g/cm³
- viscosité dynamique :
   à 150°C 15 100 mPa.s
   à 160°C 11 100 mPa.s
   à 170°C 8 000 mPa.s
   ( mesures faites sur RHEOMAT 115 Contraves)
- insoluble dans l'eau.

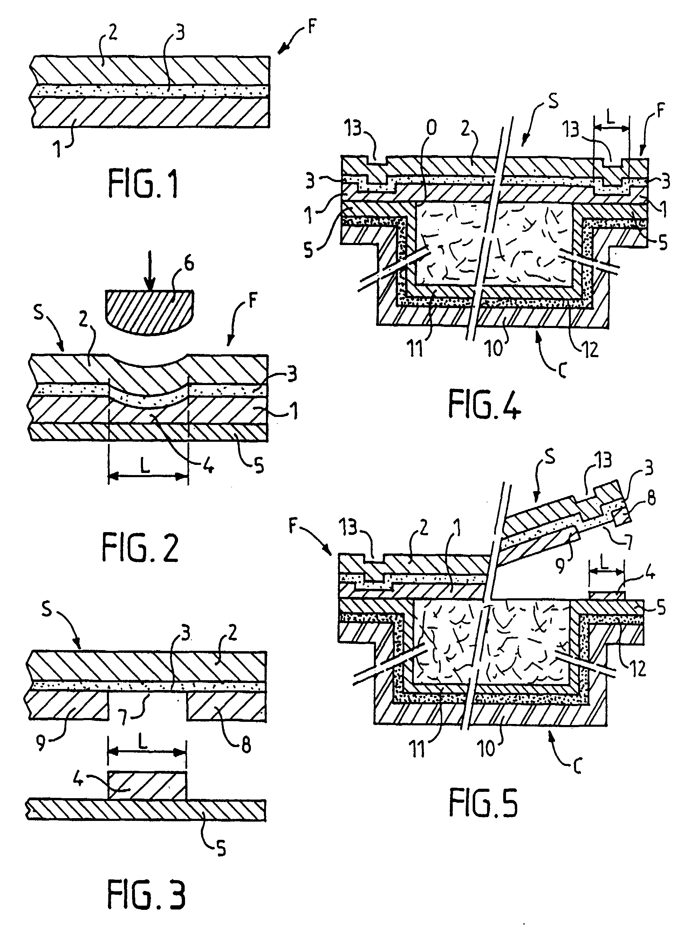

En se reportant aux dessins, notamment aux Figures 1 et 4, on peut voir que la structure d'obturation S pour un contenant C muni d'une ouverture O comprend une feuille F constituée d'au moins trois couches à savoir une couche soudante 1, une couche extérieure 2 et une couche adhésive intermédiaire 3.

La couche extérieure 2 est composée d'un film constituant un "support", qui assure à la structure :
- ses propriétés de barrière (imperméabilité au gaz, à la vapeur d'eau, aux arômes, ...) ;
- ses propriétés mécaniques (rigidité, résistance à la perforation, résistance à l'éclatement, ...) ;
- sa tenue thermique (résistance à la chaleur, au froid, à l'extrusion-couchage, ...) ;
- son inertie vis-à-vis du milieu ambiant ;
- sa stabilité dimensionnelle, importante en particulier pour l'impression d'un texte et/ou d'images ;
- ses propriétés optiques, telles que la brillance ;
- son aptitude au traitement par une machine.

La couche extérieure peut être formée d'un film souple ou rigide suivant le type de contenant C, en particulier suivant le type d'emballage considéré.

La couche soudante 1 est destinée à assurer la fermeture du contenant C. La nature de cette couche 1 est choisie en fonction de :
- son aptitude au soudage sur elle-même ou sur un autre matériau ;
- une plage d'aptitude à la soudure la plus large possible afin de faciliter le passage en machine ;
- une aptitude à la soudure dans des zones souillées, par exemple par des graisses ;
- sa résistance chimique aux produits conditionnés dans le contenant C.

La couche soudante 1 présente une déchirure facile pour permettre une ouverture aisée du contenant C. Cette facilité de déchirure est obtenue en utilisant, par exemple, pour la couche soudante 1 un film de faible épaisseur, de l'ordre de 20 micromètres ou un film plus épais offrant des propriétés de déchirure facile obtenues, par exemple, par l'ajustement des paramètres d'extrusion ou par l'ajout de charges minérales. Selon les remarques qui précèdent, la matière du film constituant la couche soudante 1 est définie en fonction de la couche utilisée pour la soudure sur le bord du contenant C, comme expliqué plus loin.

La couche adhésive 3 assure la liaison entre la couche extérieure 2 et la couche soudante 1. La couche adhésive 3 est choisie de manière à conférer à la structure la possibilité d'être refermée, après ouverture, grâce aux propriétés de collage quasi permanentes de la couche adhésive, comme expliqué plus loin.

La couche adhésive 3 peut être déposée, par exemple, entre la couche extérieure 2 et la couche soudante 1 par :
- une technique d'extrusion (par exemple extrusion-lamination) qui consiste à extruder à chaud une résine adhésive entre les films composant respectivement la couche extérieure 2 et la couche soudante 1 ;
- une technique de lamination qui consiste à déposer à chaud une résine adhésive sur le film constituant la couche extérieure 2 avant de calandrer la couche soudante 1 sur celui-ci.

Il convient d'assurer, pour la couche adhésive 3, un dépôt d'épaisseur minimale de 10 micromètres. En dehors des deux procédés évoqués précédemment, on peut utiliser tout procédé permettant de réaliser un tel dépôt.

Le choix de la résine adhésive est important pour permettre de refermer efficacement le contenant après la première ouverture.

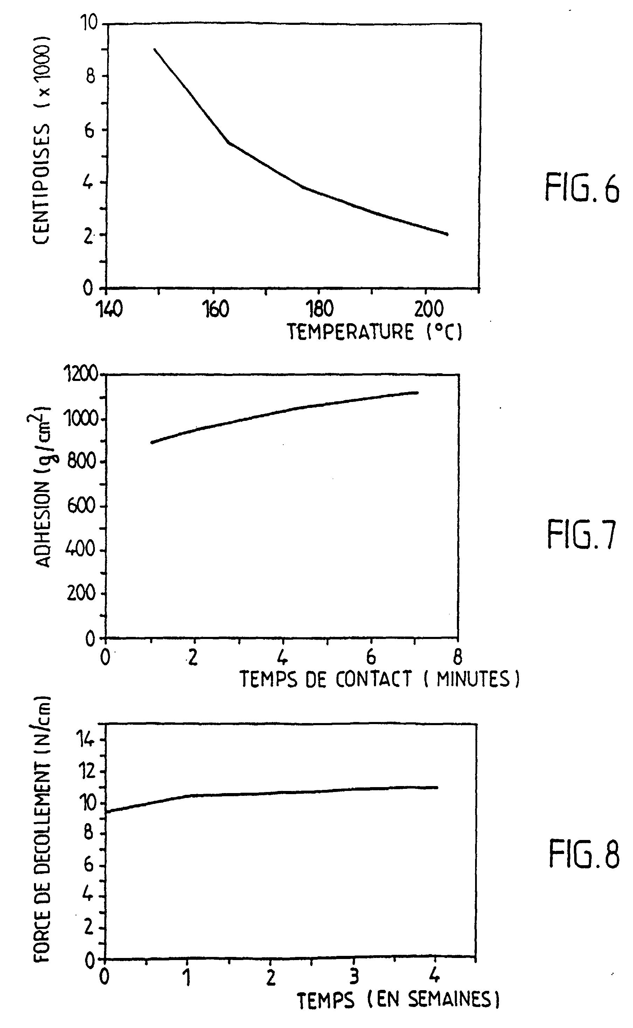

Une résine avantageuse est constituée par un polymère acrylique ayant un effet collant permanent qui se présente sous une forme solide à la température ambiante et ou par un adhésif "Hot melt" sur une base d'un élastomère thermoplastique. La Figure 6 du dessin illustre les variations de la viscosité, portées en ordonnée et exprimées en milliers de centipoises, du polymère acrylique en fonction de la température portée en abscisse et exprimée en degrés C. Une transition vitreuse se situe à 65°C et le point de fusion se situe entre 70 et 80°C.

Dans le cas du polymère acrylique, un contrôle de la qualité de la résine adhésive peut se faire en disposant une couche de 50 micromètres d'adhésif, à une température de 180°C, sur un film de polyester (connu sous le nom de "mylar"). La méthode de mesure consiste à appliquer sur le film de polyester revêtu de cette couche d'adhésif, un second film de polyester (également en "mylar") et à appliquer une pression déterminée, de 10 bars (10.10⁵ Pa) sur une surface carrée de 8 x 8 mm durant un temps d'application donné. On trace la courbe "adhésion", portée en ordonnée en fonction du "temps de contact" porté en abscisse. Pour que la résine adhésive soit considérée comme satisfaisante, il convient d'obtenir une courbe similaire à celle de la figure 7 où l'adhésion, portée en ordonnée, est exprimée en grammes force/cm², c'est-à-dire en 0,01 Newton/cm².

Les forces d'adhésion obtenues permettent de refermer le contenant, après ouverture, et de garantir son intégrité.

Le diagramme de la Figure 8 illustre les variations de la force de décollement du polymère acrylique entre les deux films de polyester utilisés dans la méthode de contrôle en fonction du temps exprimé en semaines et porté en abscisse. La force de décollement, portée en ordonnée, est exprimée en Newton/cm. L'obtention d'un palier sensiblement horizontal au bout d'une semaine montre le collage permanent de la résine. La force d'adhésion ne se dégrade donc pas dans le temps.

Pour fermer le contenant C, la structure S définie par la feuille F à au moins trois couches, est soudée suivant un cordon 4 (Figure 2) de largeur L, sur le bord d'un film 5, souple ou rigide selon le type de contenant C considéré. Le film 5 peut être souple par exemple dans le cas où le contenant C est constitué par une poche flexible ; le film 5 peut être rigide par exemple dans le cas où le contenant C est constitué par une barquette comme décrit plus loin à propos des Figures 4 et 5.

Les paramètres de soudure (pression, température et temps) sont réglés en fonction de la nature de la couche soudante 1 et de la couche pour soudure conjuguée prévue sur le film 5. La soudure est réalisée à l'aide d'une barrette 6 chauffante propre à exercer un serrage de la feuille F contre le film 5 dans la zone du cordon 4. La feuille F va subir une déformation momentanée au cours de la soudure, conduisant à des déformations permanentes qui demeurent après retrait de la barrette 6. Du fait de la nature de la couche extérieure 2, celle-ci ne subit pas de fusion et est très peu déformée de manière permanente. Par contre, la couche soudante 1 subit un maximum de déformation du fait de sa mise en fusion et de la pression exercée par la barrette de soudure 6. Il en est de même pour la couche adhésive 3. On obtient ainsi une fragilisation de la couche soudante 1 et de la couche adhésive 3 dans la région du cordon 4.

Les paramètres de soudure, et les paramètres relatifs à la liaison entre la couche adhésive 3 et la couche soudante 1, ainsi qu'avec la couche extérieure 2, sont choisis de sorte que la soudure du cordon 4 de couche soudante sur le bord du film 5 du contenant présente une résistance à l'arrachement supérieure à la force d'adhésion entre la couche soudante 1 et la couche adhésive 3. En outre, la couche adhésive 3 adhère fortement à la couche extérieure 2.

Dans ces conditions, à la première opération de dégagement de l'ouverture du contenant, en écartant la feuille F du film 5 du contenant, le cordon soudé 4 de la couche soudante reste en place sur le bord du film 5, comme illustré sur la Figure 3 et se sépare du reste de la couche soudante 1 et de la couche adhésive 3 qui est ainsi découverte sur une zone 7 correspondant au cordon 4.

Le cordon 4 est situé entre la limite extérieure et la limite intérieure du bord du film 5 de telle sorte que la zone 7 découverte de la couche 3 est comprise entre une bande extérieure 8 et une nappe intérieure 9 de couche soudante continuant à assurer une protection de la couche adhésive.

La fermeture du contenant C, après une première opération d'ouverture, peut être effectuée à nouveau en appliquant la zone découverte 7 de la couche adhésive contre le cordon 4 de couche soudante restée en place sur le bord du film 5 du contenant. La couche adhésive 3 recolle à cette partie 4 de la couche soudante et on obtient de nouveau l'intégralité de l'emballage. Cette opération peut être reproduite plusieurs fois sans dégradation du système.

Le repositionnement des films dans la zone de soudure peut être facilité en choisissant, pour la couche extérieure 2 de la feuille F, un film "support" offrant une bonne rigidité. L'adhésion entre la partie 7 de la couche adhésive dégagée et le cordon 4 de la couche soudante restée sur le bord du contenant sera d'autant plus forte que la pression exercée lors de la nouvelle fermeture sera importante.

Les couches composant la feuille F peuvent être transparentes ce qui permet d'obtenir une transparence d'ensemble de la feuille F pour le cas où l'on souhaite voir le produit conditionné à l'intérieur du contenant.

Les Figures 4 et 5 illustrent un exemple de réalisation d'un contenant C constitué par un emballage destiné au conditionnement de lardons (produit alimentaire) sous gaz. L'emballage est composé :
- de la structure d'obturation S, également appelée opercule, conforme à l'invention décrite précédemment ;
- d'un contenant C inférieur constitué par un film thermo-formé sous la forme d'une coque destinée à recevoir les lardons avant fermeture de l'emballage.

La structure d'obturation S était composée de :
- la couche extérieure 2 réalisée en polyester bi-orienté, d'une épaisseur de 50 micromètres ;
- une couche adhésive 3, réalisée avec le polymère acrylique défini précédemment, ou l'adhésif sur une base d'élastomère thermoplastique, d'une épaisseur de 10 micromètres ;
- une couche soudante 1 réalisée en polyéthylène haute densité d'une épaisseur de 20 micromètres.

Cette structure a été fabriquée sur une machine connue sous le nom de "Hot Melt".

Le polymère acrylique ou l'adhésif "Hot melt" sur une base d'élastomère thermoplastique a été couché à une température de 180°C sur le film de polyester bi-orienté de 50 micromètres constituant la couche extérieure 2. La vitesse de la ligne a été ajustée pour obtenir un dépôt de polymère acrylique d'une épaisseur de 10 micromètres. Le film de polyéthylène haute densité de 20 micromètres, constituant la couche soudante 1, a été ensuite calandré sur la couche adhésive 3 avec une pression de l'ordre de 10 bars (10.10⁵ Pa). La feuille F à trois couches ainsi obtenue a été enroulée sous forme d'une bobine et stockée pendant sept jours avant son utilisation (période de stérilisation).

Le film utilisé pour fabriquer le contenant C est constitué d'un film rigide 10 de PVC (polychlorure de vinyle) d'une épaisseur de 450 micromètres contrecollé sur un film 11 de polyéthylène linéaire d'une épaisseur de 50 micromètres, situé à l'intérieur du contenant. Le contre-collage était assuré par une couche 12 de colle polyuréthane bi-composant en milieu solvant correspondant à une épaisseur voisine de 2 micromètres.

Le conditionnement a été réalisé sur une machine à thermoformer avec réalisation d'une soudure dans la zone périphérique 13 du type cordon, d'une largeur L de 5 mm, pouvant assurer une réinjection de gaz.

Les paramètres de thermoformage du film rigide inférieur formé par l'ensemble 10-11-12 étaient les suivants :
- température de pré-chauffage = 150°C durant 1,7 secondes
- pression de placage du film = 1,8 bars (1,8.10⁵ Pa)
- temps de formage = 1,7 secondes
- pression de formage = 2,8 bars (2,8 x 10⁵ Pa)
- profondeur de formage = 20 mm.

Les paramètres de soudure de la feuille F sur le bord 5 de la coque thermoformée du contenant étaient :
- température = 150°C
- pression = 4,5 bars (4,5 x 10⁵ Pa)
- temps = 2 secondes.

Il convient de noter que les paramètres peuvent évoluer en fonction de la machine de thermoformage utilisée. Il existe en effet des tolérances plus ou moins importantes sur la mesure des paramètres selon le type de machine utilisée.

Des mesures ont été effectuées sur les barquettes correspondant au contenant C des Figures 4 et 5.

Avant soudure, la force d'adhésion entre la couche extérieure 2 en polyéthylène téréphtalate bi-orienté et la couche soudante 1 de polyéthylène haute densité était de 10 N (Newton)/15 mm.

Après soudure du cordon 4 sur le bord du film 5 de la coque thermoformée, la force de déchirure à exercer pour ouvrir le contenant était de l'ordre de 15 N/15 mm.

Après repositionnement de la structure d'obturation au niveau de la soudure sur le cordon 4 restée fixé au bord 5, une force de collage de 6 N/15 mm a été obtenue et est restée constante durant les dix essais d'ouverture-fermeture. L'emballage a été mis au réfrigérateur à une température de 4°C durant sept jours, et il n'a pas été constaté de décollement de la feuille F de la structure d'obturation par rapport au bord du film 5 du contenant.

D'autres exemples de structure selon l'invention sont fournis ci-après :
I / couche extérieure 2 en polyamide bi-orienté, d'une épaisseur de 15 micromètres ;
   couche adhésive 3 en polymère acrylique ou en adhésif "Hot melt" sur une base d'élastomère thermoplastique d'une épaisseur de 10 micromètres ;
   couche soudante 1 en polyéthylène haute densité épaisseur 20 micromètres.
II / couche extérieure 2 en PVC rigide (épaisseur 400 micromètres)/colle polyuréthane(2 micromètres)/ polyéthylène téréphtalate bi-orienté (épaisseur 12 micromètres) ;
   couche adhésive 3 : polymère acrylique d'épaisseur 10 micromètres ;
   couche soudante 1 : polyéthylène haute densité d'épaisseur 20 micromètres.
III /couche extérieure 2 en polyéthylène téréphtalate amorphe (épaisseur 400 micromètres)/colle polyuréthane (épaisseur 2 micromètres)/polyéthylène téréphtalate bi-orienté (épaisseur 12 micromètres) ;
   couche adhésive 3 : polymère acrylique ou adhésif "Hot melt" sur une base d'élastomère thermoplastique en couches d'épaisseur de 10 micromètres ;
   couche soudante 1 : polyéthylène haute densité, épaisseur de 20 micromètres.

L'invention permet donc une ouverture facile du contenant, en particulier de l'emballage, suivie d'une fermeture assurant son intégrité. L'invention peut s'appliquer à tout type d'emballage présentant au moins une zone de soudure. La conformité au contact alimentaire des couches composant la structure d'obturation, et le contenant, permet l'utilisation pour le conditionnement de produits alimentaires.

La structure d'obturation multicouche S peut être utilisée sur tout type de machine de conditionnement procédant au moins à une soudure. Contrairement aux solutions de l'art antérieur, telles que fermetures par coopération mécanique de crochets, l'invention ne nécessite pas une modification du matériel de conditionnement car la structure d'obturation multicouche se présente sous la forme d'un simple film et ne nécessite pas d'ajouter des accessoires tels que des crochets sous forme de bandes nervure/rainure ou de bandes adhésives. Avant l'ouverture, l'emballage garde toutes ses propriétés mécaniques et de barrière nécessaires à la bonne conservation du produit conditionné.

## Revendications

1. Structure d'obturation (S) pour un contenant (C) muni d'une ouverture (O), comprenant une feuille (F) soudée suivant le bord de l'ouverture du contenant, la feuille (F) étant constituée d'au moins trois couches, à savoir une couche soudante (1) appliquée et soudée suivant un cordon (4) de largeur L contre le bord de l'ouverture, une couche extérieure (2) formant barrière et une couche adhésive (3) intermédiaire, la couche soudante ayant subi une fragilisation dans la région du cordon (4), la soudure du cordon (4) de la couche soudante sur le bord de l'ouverture présentant une résistance à l'arrachement supérieure à la force d'adhésion entre couche soudante (1) et couche adhésive (3) de sorte qu'à la première opération de dégagement de l'ouverture (O) le cordon soudé (4) de la couche soudante reste en place sur le bord de l'ouverture et se sépare par déchirure du reste de la couche soudante (1) et de la couche adhésive (3), laquelle est ainsi découverte sur une zone (7) correspondant au dit cordon (4), la fermeture du contenant (C) pouvant être effectuée à nouveau par application de la zone découverte (7) de la couche adhésive contre le cordon (4) de la couche soudante restée en place,
caractérisée en ce que ladite couche adhésive (3) intermédiaire est formée par un dépôt de résine d'épaisseur minimale de 10 micromètres, et en ce que la fragilisation de ladite couche soudante dans la région du cordon (4), est réalisée par la soudure du cordon (4) à l'aide d'une barrette chauffante (6) de manière à déformer la couche soudante (1) et la couche adhésive (3), sur toute la largeur L du cordon (4).

2. Structure d'obturation selon la revendication 1, caractérisée par le fait que la zone découverte (7) de la couche adhésive, après la première ouverture, est comprise entre deux bandes ou nappes (8, 9) de couche soudante.

3. Structure d'obturation selon la revendication 1 ou 2, caractérisée par le fait que la couche extérieure (2) est un film souple, en particulier d'épaisseur d'environ 50 micromètres.

4. Structure d'obturation selon la revendication 3, caractérisée par le fait que la couche extérieure (2) est en polyester bi-orienté.

5. Structure d'obturation selon la revendication 1 ou 2, caractérisée par le fait que la couche extérieure (2) est un film rigide.

6. Structure d'obturation selon l'une des revendications précédentes, caractérisée par le fait que la couche soudante (1) est constituée par un film de faible épaisseur, en particulier de l'ordre de 20 micromètres, facile à déchirer ou d'une épaisseur plus importante présentant des propriétés de déchirure facile obtenues par l'ajustement des paramètres d'extrusion ou par l'ajout de charges minérales.

7. Structure d'obturation selon l'une des revendications précédentes, caractérisée par le fait que la couche adhésive (3) est formée par un polymère acrylique à effet collant permanent, sous forme solide à température ambiante ou d'un adhésif "Hot melt" sur une base d'élastomère thermoplastique.

8. Structure d'obturation selon l'une des revendications précédentes, caractérisée par le fait que les matières composant les couches sont conformes au contact alimentaire.

9. Structure d'obturation selon l'une des revendications précédentes caractérisée en ce que la couche adhésive est en adhésif Hot melt sur une base d'un élastomère thermoplastique présentant un point de fusion compris entre 85 et 95°C.

10. Structure d'obturation selon l'une des revendications précédentes caractérisée en ce que la couche adhésive est en adhésif Hot melt sur une base d'un élastomère thermoplastique présentant une viscosité dynamique de 15 100 mPa.s à 150°C, de 11 100 mPa.s à 160°C, de 8 000 mPa.s à 170°C.

11. Structure d'obturation selon l'une des revendications précédentes caractérisée en ce que l'adhésif de la couche adhésive est choisi de façon à procurer une force d'adhésion d'environ 900 grammes force/cm² après 1 minute de contact et d'environ 1 100 grammes force/cm² après 7 minutes de contact, la mesure de la force d'adhésion étant réalisée à partir d'une couche de 50 micromètres d'adhésif enserrée entre deux couches de polyester et ayant subi une pression de 10.10⁵ Pa sur une surface carrée de 8 x 8 mm.

12. Structure d'obturation selon l'une des revendications précédentes caractérisée en ce que la couche soudante est en polyéthylène haute densité.

13. Structure d'obturation selon l'une des revendications 1 à 11 caractérisée en ce que les couches composant la feuille (F) sont transparentes de sorte que la feuille (F) est elle-même transparente.

14. Structure d'obturation selon l'une des revendications 1 à 11 caractérisée en ce que la couche soudante est en polyéthylène haute densité et en ce que les couches composant la feuille (F) sont transparentes de sorte que la feuille (F) est elle-même transparente.

15. Structure d'obturation selon l'une des revendications 1 à 14 caractérisée en ce que la nature de la couche extérieure est telle qu'elle ne subit pas de fusion et est très peu déformée de manière permanente.

16. Contenant muni d'une ouverture fermée par une feuille soudée suivant le bord de l'ouverture caractérisé par le fait que la feuille est constituée par une structure d'obturation conforme à l'une des revendications précédentes.

17. Procédé d'obturation d'un contenant muni d'une ouverture par une feuille soudée suivant le bord de l'ouverture, dans lequel on utilise une feuille (F) constituée d'au moins trois couches, à savoir une couche soudante (1) à appliquer contre le bord de l'ouverture, une couche extérieure (2) formant barrière et une couche adhésive intermédiaire (3), et qu'on réalise la soudure de la couche soudante (1) sur le bord de l'ouverture suivant un cordon (4) de largeur L présentant une résistance à l'arrachement supérieure à la force d'adhésion entre couche soudante (1) et couche adhésive (3), de sorte qu'à la première opération de dégagement de l'ouverture (O) du contenant, le cordon soudé (4) de la couche soudante reste en place sur le bord de l'ouverture et se sépare essentiellement par déchirure du reste de la couche soudante et de la couche adhésive (3),
caractérisé en ce que ladite couche adhésive (3) intermédiaire est formée par un dépôt de résine d'épaisseur minimale de 10 micromètres, et en ce que la soudure est effectuée à l'aide d'une barrette (6) chauffante de manière à provoquer une fragilisation par déformation de la couche soudante (1) et de la couche adhésive (3) dans la région du cordon (4), sur toute la largeur L de celui-ci.

18. Procédé d'obturation selon la revendication 17, caractérisé par le fait que, pour réaliser la feuille multicouche (F), la couche adhésive (3) est formée par une résine adhésive extrudée à chaud entre la couche extérieure (2) et la couche soudante (1).

19. Procédé d'obturation selon la revendication 17, caractérisé par le fait que la feuille (F) multicouche est préparée en déposant à chaud la couche adhésive (3) sur la couche extérieure (2) avant de calandrer la couche soudante (1).

20. Procédé selon l'une des revendications 17 à 19 caractérisé en ce que la couche adhésive est en adhésif Hot melt sur une base d'un élastomère thermoplastique présentant un point de fusion compris entre 85 et 95°C.

21. Procédé selon l'une des revendications 17 à 20 caractérisé en ce que la couche adhésive est en adhésif Hot melt sur une base d'un élastomère thermoplastique présentant une viscosité dynamique de 15 100 mPa.s à 150°C, de 11 100 mPa.s à 160°C, de 8 000 mPa.s à 170°C.

22. Procédé selon l'une des revendications 17 à 21 caractérisé en ce que la couche soudante est en polyéthylène haute densité.

23. Procédé selon l'une des revendications 17 à 22 caractérisé en ce que les couches composant la feuille (F) sont transparentes de sorte que la feuille (F) est elle-même transparente.

24. Procédé selon l'une des revendications 17 à 23 caractérisé en ce que la nature de la couche extérieure est telle qu'elle ne subit pas de fusion et est très peu déformée de manière permanente.

25. Procédé selon l'une des revendications 17 à 24 caractérisé en ce que la couche extérieure est un film souple, en particulier d'épaisseur d'environ 50 micromètres.

26. Procédé selon l'une des revendications 17 à 25 caractérisé en ce que la couche extérieure est en polyester bi-orienté.

27. Procédé selon l'une des revendications 17 à 24 caractérisé en ce que la couche extérieure est un film rigide.

28. Procédé selon l'une des revendications 17 à 27 caractérisé en ce que la couche soudante est constituée par un film de faible épaisseur, en particulier de l'ordre de 20 micro-mètres, facile à déchirer ou d'une épaisseur plus importante présentant des propriétés de déchirure facile obtenues par l'ajustement des paramètres d'extrusion ou par l'ajout de charges minérales.

## Patentansprüche

1. Verschlußvorrichtung (S) für einen Behälter (C), der eine Öffnung (O) aufweist, mit einem Blatt (F), das entlang dem Rand der Öffnung des Behälters angeschweißt ist, wobei das Blatt (F) aus mindestens drei Schichten besteht, nämlich einer Schweiß-Schicht (1), die auf dem Öffnungsrand angebracht und entlang eines Wulstes (4) der Breite L an dem Öffnungsrand angeschweißt ist, einer Außen-Schicht (2), die eine Barriere bildet, und einer zwischenliegenden Haft-Schicht (3), wobei die Schweiß-Schicht im Bereich des Wulstes (4) mit einer Schwächung versehen ist, und wobei der Schweißwulst (4) der Schweiß-Schicht auf dem Rand der Öffnung einen Widerstand gegen das Abreißen hat, der größer ist als die Haftkraft zwischen der Schweiß-Schicht (1) und der Haft-Schicht (3), so daß beim ersten Öffnen der Öffnung (O) der Schweißwulst (4) der Schweiß-Schicht auf dem Rand der Öffnung bleibt und sich vom Rest der Schweiß-Schicht (1) und der Haft-Schicht (3) durch Zerreißen trennt, so daß letztere in einem dem Wulst (4) entsprechenden Bereich (7) freigelegt wird, und das Schließen des Behälters (C) erneut durchführbar ist, indem der freigelegte Bereich (7) der Haft-Schicht auf den Wulst (4) der verbliebenen Schweiß-Schicht aufgebracht wird,
dadurch gekennzeichnet, daß die zwischenliegende Haft-Schicht (3) durch Aufbringen eines Harzes mit einer Mindestdicke von 10 Mikrometern gebildet ist, und daß die Schwächung der Schweiß-Schicht im Bereich des Wulstes (4) erreicht wird durch Schweißen des Wulstes (4) mittels eines Heizstabs (6), derart, daß die Schweiß-Schicht (1) und die Haft-Schicht (3) über die gesamte Breite L des Wulstes (4) verformt werden.

2. Verschlußvorrichtung nach Anspruch 1, dadurch gekennzeichnet, daß der freigelegte Bereich (7) der Haft-Schicht nach dem ersten Öffnen sich zwischen zwei Banden oder Schalen (8,9) der Schweiß-Schicht eingefaßt ist.

3. Verschlußvorrichtung nach Anspruch 1 oder 2, dadurch gekennzeichnet, daß die Außen-Schicht (2) ein flexibler Film ist, insbesondere mit einer Dicke von ungefähr 50 Mikrometern.

4. Verschlußvorrichtung nach Anspruch 3, dadurch gekennzeichnet, daß die Außen-Schicht (2) aus bi-orientiertem Polyester ist.

5. Verschlußvorrichtung nach Anspruch 1 oder 2, dadurch gekennzeichnet, daß die Außen-Schicht (2) ein starrer Film ist.

6. Verschlußvorrichtung nach einem der vorangehenden Ansprüche, dadurch gekennzeichnet, daß die Schweiß-Schicht (1) gebildet ist von einem Film geringer Dicke, insbesondere in der Größenordnung von 20 Mikrometern, der leicht zu zerreißen ist, oder größerer Dicke, welcher mittels Einstellens von Extrusionsparametern oder durch Hinzugabe von mineralischen Füllstoffen die Eigenschaft einer leichten Zerreißbarkeit hat.

7. Verschlußvorrichtung nach einem der vorangehenden Ansprüche, dadurch gekennzeichnet, daß die Haft-Schicht (3) von einem Acrylpolymer mit permanenter Haftwirkung gebildet ist, das bei Raumtemperatur eine feste Form hat, oder von einem "Holt-Melt" -Haftstoff auf Basis eines thermoplastischen Elastomers gebildet ist.

8. Verschlußvorrichtung nach einem der vorangehenden Ansprüche, dadurch gekennzeichnet, daß die Materialien, aus denen die Schichten sind, für den Kontakt mit Nahrungsmitteln geeignet sind.

9. Verschlußvorrichtung nach einem der vorangehenden Ansprüche, dadurch gekennzeichnet, daß die Haft-Schicht aus einem Holt-Melt-Haftstoff auf Basis eines thermoplastischen Elastomers ist, dessen Schmelzpunkt im Bereich von 85-95°C liegt.

10. Verschlußvorrichtung nach einem der vorangehenden Ansprüche, dadurch gekennzeichnet, daß die Haft-Schicht aus einem Holt-Melt-Haftstoff auf Basis eines thermoplastischen Elastomers ist, der eine dynamische Viskosität von 15 100 mPa.s bei 150°C, von 11 100 mPa.s bei 160°C und von 8 000 mPa.s bei 170°C besitzt.

11. Verschlußvorrichtung nach einem der vorangehenden Ansprüche, dadurch gekennzeichnet, daß der Haftstoff der Haft-Schicht so ausgewählt ist, daß nach 1 Minute Kontakt eine Haftkraft von ungefähr 900 Pond/cm² und nach 7 Minuten Kontakt von ungefähr 1 100 Pond/cm² gegeben ist, wobei das Messen der Haftkraft realisiert wird ausgehend von einer Schicht von 50 Mikrometern von Haftstoff, welche zwischen zwei Polyesterschichten angeordnet ist und welche auf einer quadratischen Fläche von 8 x 8 mm einem Druck von 10.10⁵ Pa ausgesetzt wurde.

12. Verschlußvorrichtung nach einem der vorangehenden Ansprüche, dadurch gekennzeichnet, daß die Schweiß-Schicht aus Polyethylen hoher Dichte ist.

13. Verschlußvorrichtung nach einem der Ansprüche 1 bis 11, dadurch gekennzeichnet, daß die Schichten, von denen das Blatt (F) gebildet ist, transparent sind, so daß das Blatt (F) seinerseits transparent ist.

14. Verschlußvorrichtung nach einem der Ansprüche 1 bis 11, dadurch gekennzeichnet, daß die Schweiß-Schicht aus Polyethylen hoher Dichte ist und daß die Schichten, von denen das Blatt (F) gebildet ist, transparent sind, so daß das Blatt (F) seinerseits transparent ist.

15. Verschlußvorrichtung nach einem der Ansprüche 1 bis 14, dadurch gekennzeichnet, daß die Beschaffenheit der Außen-Schicht derart vorgesehen ist, daß sie nicht schmilzt und nur einer geringfügigen Dauerverformung unterliegt.

16. Behälter mit einer Öffnung, die durch ein entlang dem Öffnungsrand angeschweißtes Blatt verschlossen ist, dadurch gekennzeichnet, daß das Blatt von einer Verschlußvorrichtung nach einem der vorangehenden Ansprüche gebildet ist.

17. Verfahren zum Verschließen eines Behälter mit einer Öffnung durch ein Blatt, das entlang dem Öffnungsrand angeschweißt ist, wobei ein Blatt (F) verwendet wird, das mindestens drei Schichten hat, nämlich eine Schweiß-Schicht (1), die am Öffnungsrand angebracht wird, eine Außen-Schicht (2), die eine Barriere bildet, und eine zwischenliegende Haft-Schicht (3), und wobei das Anschweißen der Schweiß-Schicht (1) auf dem Öffnungsrand entlang eines Wulstes (4) der Breite L mit einem Widerstand gegen ein Losreißen realisiert wird, der größer ist als die Haftkraft zwischen der Schweiß-Schicht (1) und der Haft-Schicht (3), so daß beim ersten Öffnungsvorgang der Öffnung (O) des Behälters der angeschweißte Wulst (4) der Schweiß-Schicht in ihrer Position am Rand der Öffnung bleibt und sich vom Rest der Schweiß-Schicht und der Haft-Schicht (3) im wesentlichen durch Zerreißen loslöst,
dadurch gekennzeichnet, daß die zwischenliegende Haft-Schicht (3) von einer Harzablagerung einer Mindestdicke von 10 Mikrometern gebildet wird, und daß das Anschweißen mit Hilfe eines Heizstabs (6) erfolgt, um eine Schwächung durch Verformen der Schweiß-Schicht (1) und der Haft-Schicht (3) im Bereich des Wulstes (4) über deren ganze Breite L hinweg zu erzeugen.

18. Verfahren zum Verschließen nach dem Anspruch 17, dadurch gekennzeichnet, daß zum Herstellen des mehrlagigen Blatts (F) die Haft-Schicht (3) von einem warmextrudierten Klebeharz zwischen der Außen-Schicht (2) und der Schweiß-Schicht (1) gebildet wird.

19. Verfahren zum Verschließen nach dem Anspruch 17, daduch gekennzeichnet, daß das mehrlagige Blatt (F) hergestellt wird, indem die Haft-Schicht (3) auf der Außen-Schicht (2) heißabgelagert wird, bevor die Schweiß-Schicht (1) aufkalandert wird.

20. Verfahren nach einem der Ansprüche 17 bis 19, dadurch gekennzeichnet, daß die Haft-Schicht aus einem Hot-Melt-Haftstoff auf Basis eines thermoplastischen Elastomers ist, dessen Schmelzpunkt im Bereich von 85 bis 95°C liegt.

21. Verfahren nach einem der Ansprüche 17 bis 20, dadurch gekennzeichnet, daß die Haft-Schicht aus Hot-Melt-Haftstoff auf Basis eines thermoplastischen Elastomers ist, der eine dynamische Viskosität von 15 100 mPa.s bei 150°C, von 11 100 mPa.s bei 160°C und von 8 000 mPa.s bei 170°C besitzt.

22. Verfahren nach einem der Ansprüche 17 bis 21, dadurch gekennzeichnet, daß die Schweiß-Schicht aus Polyethylen hoher Dichte ist.

23. Verfahren nach einem der Ansprüche 17 bis 22, dadurch gekennzeichnet, daß die Schichten, von denen das Blatt (F) gebildet ist, transparent sind, so daß das Blatt (F) seinerseits transparent ist.

24. Verfahren nach einem der Ansprüche 17 bis 23, dadurch gekennzeichnet, daß die Außen-Schicht so beschaffen ist, daß sie nicht schmilzt und nur einer geringfügigen Dauerverformung unterliegt.

25. Verfahren nach einem der Ansprüche 17 bis 24, dadurch gekennzeichnet, daß die Außen-Schicht ein flexibler Film ist, insbesondere einer Dicke von ungefähr 50 Mikrometern.

26. Verfahren nach einem der Ansprüche 17 bis 25, dadurch gekennzeichnet, daß die Außen-Schicht aus bi-orientiertem Polyester ist.

27. Verfahren nach einem der Ansprüche 17 bis 24, dadurch gekennzeichnet, daß die Außen-Schicht ein starrer Film ist.

28. Verfahren nach einem der Ansprüche 17 bis 27, dadurch gekennzeichnet, daß die Schweiß-Schicht gebildet ist von einem Film geringer Dicke, insbesondere in der Größenordnung von 20 Mikrometern, der leicht zu zerreißen ist, oder größerer Dicke, welcher mittels Einstellen der Extrusionsparameter oder durch Hinzufügung von mineralischen Füllstoffen die Eigenschaft einer leichten Zerreißbarkeit hat.

## Claims

1. Sealing structure (S) for a container (C) provided with an opening (0), comprising a sheet (F) welded around the edge of the opening of the container, the sheet (F) consisting of at least three layers, namely a welding layer (1) pressed against and welded as a bead (4) to the edge of the opening, a barrier-forming exterior layer (2) and an intermediate adhesive layer (3), the welding layer having been weakened in the region of the bead (4), the weld between the bead (4) of the welding layer and the edge of the opening having a tear strength greater than the strength of adhesion between the welding layer (1) and the adhesive layer (3) so that, at the first occasion of exposing the opening (0), the welded bead (4) of the welding layer remains in place around the edge of the opening and separates, by tearing, from the rest of the welding layer (1) and from the adhesive layer (3), which adhesive layer is thus uncovered over an area (7) corresponding to the said bead (4), it being possible for the container (C) to be sealed again by pressing the uncovered area (7) of the adhesive layer against the bead (4) of the welding layer that has remained in place, characterized in that said intermediate adhesive layer (3) is formed by depositing a resin to a minimum thickness of 10 micrometres and in that the said weakening of the welding layer in the region of the bead takes place by the welding of the bead (4) using a hot tool (6) so as to deform the welding layer (1) and the adhesive layer (3) over the whole width L of said bead (4).

2. Sealing structure according to Claim 1, characterized in that the uncovered area (7) of the adhesive layer, after the first opening, is between two bands or strips (8, 9) of the welding layer.

3. Sealing structure according to Claim 1 or 2, characterized in that the exterior layer (2) is a flexible film, in particular of thickness of about 50 micrometers.

4. Sealing structure according to Claim 3, characterized in that the exterior layer (2) is made of biaxially oriented polyester.

5. Sealing structure according to Claim 1 or 2, characterized in that the exterior layer (2) is a rigid film.

6. Sealing structure according to one of the preceding claims, characterized in that the welding layer (1) consists of a thin film, the thickness being about 20 micrometres, which is easy to tear, or of a thicker film having easy-tear properties obtained by adjusting the extrusion parameters or by adding mineral fillers.

7. Sealing structure according to one of the preceding claims, characterized in that the adhesive layer (3) is formed by a permanently tacky acrylic polymer, which is solid at room temperature, or by a hot-melt adhesive based on a thermoplastic elastomer.

8. Sealing structure according to one of the preceding claims, characterized in that the materials of which the layers are composed comply with food-contact regulations.

9. Sealing structure according to one of the preceding claims, characterized in that the adhesive layer is made of a hot-melt adhesive based on a thermoplastic elastomer having a melting point of between 85 and 95°C.

10. Sealing structure according to one of the preceding claims, characterized in that the adhesive layer is made of a hot-melt adhesive based on a thermoplastic elastomer having a dynamic viscosity of 15,100 mPa.s at 150°C, of 11,100 mPa.s at 160°C and of 8000 mPa.s at 170°C.

11. Sealing structure according to one of the preceding claims, characterized in that the adhesive of the adhesive layer is chosen so as to provide an adhesive strength of approximately 900 grams force/cm² after 1 minute of contact and approximately 1100 grams force/cm² after 7 minutes of contact, the adhesive strength being measured using a 50 micrometre layer of adhesive sandwiched between two polyester layers and a pressure of 10 x 10⁵ Pa having been applied on an 8 x 8 mm square area.

12. Sealing structure according to one of the preceding claims, characterized in that the welding layer is made of high-density polyethylene.

13. Sealing structure according to one of Claims 1 to 11, characterized in that the layers of which the sheet (F) is composed are transparent so that the sheet (F) itself is transparent.

14. Sealing structure according to one of Claims 1 to 11, characterized in that the welding layer is made of high-density polyethylene and in that the layers of which the sheet (F) is composed are transparent so that the sheet (F) itself is transparent.

15. Sealing structure according to one of Claims 1 to 14, characterized in that the nature of the exterior layer is such that it does not undergo melting and is very little permanently deformed.

16. Container provided with an opening sealed by a sheet welded around the edge of the opening, characterized in that the sheet consists of a sealing structure according to one of the preceding claims.

17. Method of sealing a container provided with an opening by a sheet welded around the edge of the opening, characterized in that a sheet (F) is used which consists of at least three layers, namely a welding layer (1) to be pressed against the edge of the opening, a barrier-forming exterior layer (2) and an intermediate adhesive layer (3 and in which the weld of the welding layer (1) to the edge of the opening along a bead (4) of width L having a tear strength greater than the strength of adhesion between the welding layer (1) and the adhesive layer (3), so that, at the first occasion of exposing the opening (0) of the container, the welded bead (4) of the welding layer remains in place around the edge of the opening and separates, essentially by tearing, from the rest of the welding layer and from the adhesive layer (3),
characterized in that said intermediate adhesive layer (3) is formed by depositing a resin to a minimum thickness of 10 micrometres and in that the welding is carried out using a hot tool (6) so as to weaken by deformation the welding layer (1) and the adhesive layer (3) in the region of the bead (4) over the whole width L of said bead (4).

18. Sealing method according to Claim 17, characterized in that, in order to produce the multilayer sheet (F), the adhesive layer (3) is formed by an adhesive resin extruded, hot, between the exterior layer (2) and the welding layer (1).

19. Sealing method according to Claim 17, characterized in that the multilayer sheet (F) is produced by depositing, hot, the adhesive layer (3) on the exterior layer (2) before calendering the welding layer (1).

20. Method according to one of Claims 17 to 19, characterized in that the adhesive layer is made of a hot-melt adhesive based on a thermoplastic elastomer having a melting point of between 85 and 95°C.

21. Method according to one of Claims 17 to 20, characterized in that the adhesive layer is made of a hot-melt adhesive based on a thermoplastic elastomer having a dynamic viscosity of 15,100 mPa.s at 150°C, of 11,100 mPa.s at 160°C and of 8000 mPa.s at 170°C.

22. Method according to one of Claims 17 to 21, characterized in that the welding layer is made of high-density polyethylene.

23. Method according to one of Claims 17 to 22, characterized in that the layers of which the sheet (F) is composed are transparent so that the sheet (F) itself is transparent.

24. Method according to one of Claims 17 to 23, characterized in that the nature of the exterior layer is such that it does not undergo melting and is very little permanently deformed.

25. Method according to one of Claims 17 to 24, characterized in that the exterior layer is a flexible film, in particular of a thickness of about 50 micrometres.

26. Method according to one of Claims 17 to 25, characterized in that the exterior layer is made of biaxially oriented polyester.

27. Method according to one of Claims 17 to 24, characterized in that the exterior layer is a rigid film.

28. Method according to one of Claims 17 to 27, characterized in that the welding layer consists of a thin film, the thickness being about 20 micrometres, which is easy to tear, or of a thicker film having easy-tear properties obtained by adjusting the extrusion parameters or by adding mineral fillers.
